# EUROPEAN PATENT APPLICATION

(11) **EP 2 975 533 A1**
(43) Date of publication of application: **20.01.2016**
(21) Application number: 14763815.9
(22) Date of filing: 06.03.2014
(51) Int. Cl.: G06F 17/28, G10L 13/00, G10L 15/00

(54) **TERMINAL DEVICE, TRANSLATION SYSTEM, COMMUNICATION CONTROL METHOD, AND PROGRAM**

(30) Priority: 13.03.2013 JP 2013049980
(71) Applicant: NEC CORPORATION, Tokyo 108-8001 (JP)
(72) Inventor: OONISHI, Aki, Kawasaki-shi Kanagawa 211-8666 (JP)
(74) Representative: Vossius & Partner Patentanwälte Rechtsanwälte mbB
(86) International application number: PCT/JP2014/001236
(87) International publication number: WO 2014/141639

(57) **Abstract**

[**PROBLEM TO BE SOLVED**] Start/stop of a predetermined function can be executed by device side.

[**SOLUTION**] A terminal device 50 comprising a first communication section 51 which connects to a translation means 60, a second communication section 52 which has a shorter communicable distance in comparison with the first communication section 51, and a communication control section 53 which, after information of an other terminal device 70 is received by the second communication section 52, controls to commence communication with the translation means 60 by the first communication section 51 based on the information of the other terminal device 70.

## Description

### TECHNICAL FIELD

The present invention relates to a terminal device, a translation system, a communication control method, and a program.

### BACKGROUND ART

In recent years, opportunities to communicate with foreigners have been increasing from not only traveling to overseas destinations, but from the increase of foreigners visiting Japan from foreign countries, the increase in English utilization in the business scene, etc. As a solution to communicate more efficiently exceeding the limits of language, an automatic translation system (or automatic translation service) is being put to practical use.

An automatic translation system requires time-consuming tasks for a user to commence/terminate automatic translation, for example, starting an exclusive use application for a portable telephone, inputting the other party's telephone number and language, connecting with the other party's portable telephone, and disconnecting the exclusive use application after terminating a conversation. Further, when the language of the other party is unknown, the language must be confirmed with the other party in advance which takes time and effort to establish and select the other party's language. In view of such circumstances, a technology for reducing the complicatedness of user's operation is proposed.

For example, in Patent Document 1 a technology is proposed in which a language to be interpreted is established with the other party by exchanging information usable for automatic interpretation through communication (i.e., short distance communication (NFC), such as Bluetooth, etc., WiFi, a mobile communications network, etc.) between interpretation terminals, and the other party's interpretation terminal is provided with a translated text by a translation module.

### PRIOR ART DOCUMENT

### PATENT DOCUMENT

Patent Document 1: JP 2011-253543

### SUMMARY OF INVENTION

### Problem to be Solved by the Invention

However in the above-described Patent Document 1, there is a problem in that the complicatedness of user operation cannot be reduced as the information (telephone number, etc.) for designating the other party's terminal device must be inputted when connecting associated interpretation terminals via a mobile communications network.

Additionally, in the above-described Patent Document 1, there is a problem in that the terminal device must be connected via a mobile communications network solely for the purpose of confirming whether or not a conversation by automatic translation is available between the other party's terminal device. Accordingly, after a connection is established via a mobile communications network, the user may realize that the other party's terminal device is not provided with a translation function (application), the language is untranslatable, etc.

Therefore, an object of the present invention is to provide a terminal device, a translation system, a communication control method, and a program in that while being able to mitigate the complexity of user operation, useless connections to a communication line network can be reduced.

### Means for Solving the Problem

A terminal device characterized by comprising: a first communication section which connects to a translation means; a second communication section which has a shorter communicable distance in comparison with the first communication section; and a communication control section which, after information of an other terminal device is received by the second communication section, controls to commence communication with the translation means by the first communication section based on the information of the other terminal device.

A translation system including a translation server and a plurality of terminal devices, the translation system characterized by the translation server comprising: a translation section which translates information inputted from the plurality of terminal devices into information of other languages; and the plurality of terminal devices comprising: a first communication section which is connected to the translation server; a second communication section which has a shorter communicable distance in comparison with the first communication section; a communication control section which, after information of an other terminal device is received by the second communication section, controls to commence communication with the translation server by the first communication section based on the information; and a presentation section which presents the information from the other terminal device which has been acquired from the translation server through communication by the first communication section and translated into the other language by the translation section.

A communication control method characterized by including: a first communication step of connecting with a translation means by a first communication section; a reception step of receiving information of an other terminal device by a second communication section which has a shorter communicable distance in comparison with the first communication section; and a communication control step of controlling to commence communication with the translation means by the first communication section based on the information of the other terminal device.

A program characterized by causing a computer of a terminal device to execute: a first communication function of connecting with a translation means by a first communication section; a reception function of receiving information of an other terminal device by a second communication section which has a shorter communicable distance in comparison with the first communication section; and a communication control function of controlling to commence communication with the translation means by the first communication section based on the information of the other terminal device.

### Effect of the Invention

According to this invention, while the complexity of user operation can be mitigated, useless connections to a communication line network can be reduced.

### BRIEF DESCRIPTION OF DRAWINGS

FIG. 1 is a block diagram illustrating the structure of a translation system 100 according to an embodiment of the present invention;
FIG. 2 is a block diagram illustrating the structure of a portable telephone 10 according to an embodiment of the present invention;
FIG. 3 is a flow chart for explaining operation of the portable telephone 10 according to the embodiment;
FIG. 4 is a flow chart for explaining operations of the portable telephone 10 according to the embodiment;
FIG. 5 is a conceptual diagram for explaining operation of a translation system 100 according to the embodiment; and
FIG. 6 is a block diagram illustrating the structure of Supplementary Note 1.

### DESCRIPTION OF EMBODIMENT

Hereinafter, the embodiment of the present invention will be described with reference to the accompanying drawings.

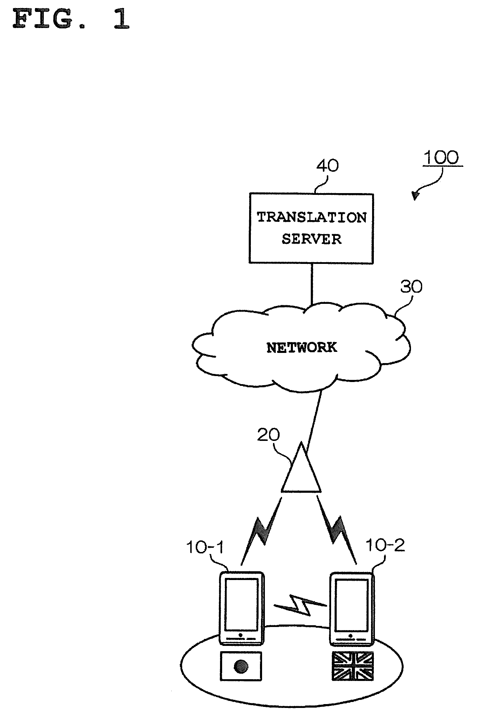

FIG. 1 is a block diagram illustrating the structure of a translation system 100 according to an embodiment of the present invention. In FIG. 1, the translation system 100 is provided with portable telephones 10-1 and 10-2, abase station 20, a network 30 and a translation server 40. The portable telephones 10-1 and 10-2 are terminal devices used by users that employ different respective languages. The portable telephones 10-1 and 10-2 comprise a first communication section (described later) which connects to the network 30 composed of a communication line network, Internet, etc. via the base station 20 and performs voice calls, data communication, etc.; and a second communication section (described later) which performs data communication, etc. by short distance wireless between the associated portable telephones 10-1 and 10-2.

The network 30 is composed of a communication line network, Internet, etc. The translation server 40 provides a translation service which translates into other languages the voice data, text, etc. transmitted from the portable telephones 10-1 and 10-2. For example, the translation server 40 translates the language (Japanese) which the user of the portable telephone 10-1 employs into the language (English) which the user of the portable telephone 10-2 employs and provides the translation to the portable telephone 10-2. Conversely, the translation server 40 translates the language (English) which the user of the portable telephone 10-2 employs into the language (Japanese) which the user of the portable telephone 10-1 employs and provides the translation to the portable telephone 10-1. Accordingly, a conversation assisted by a smooth translation is achieved similar to a normal conversation. Hereinafter, the portable telephones 10-1 and 10-2 are generically named and explained as the portable telephones 10.

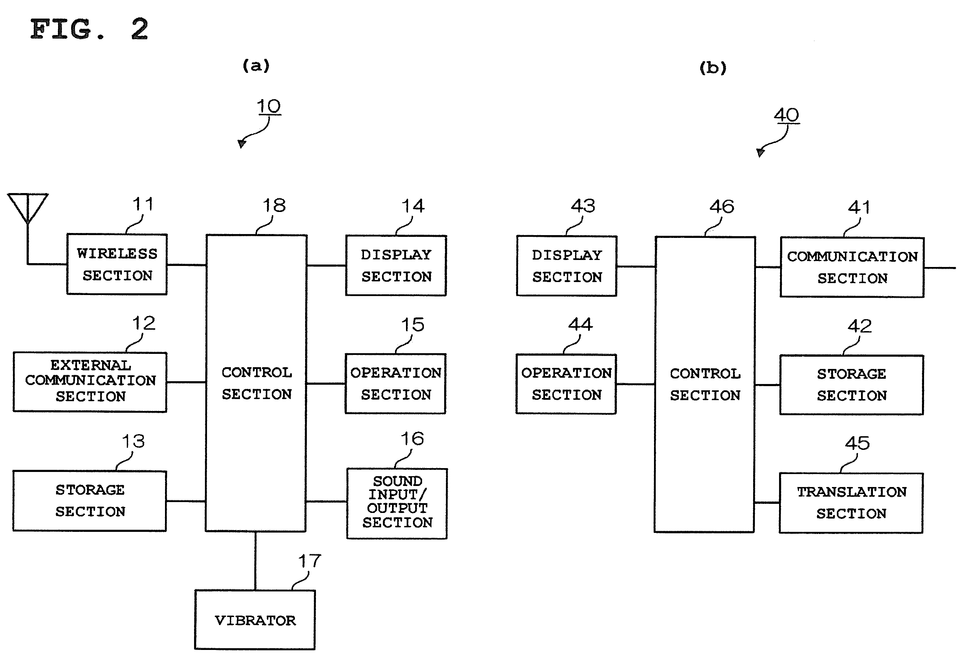

FIG. 2(a) is a block diagram illustrating the structure of the portable telephone 10 according to an embodiment of the present invention. FIG. 2(b) is block diagram illustrating the structure of the translation server 40 according to an embodiment of the present invention. Additionally, only features relevant to the present invention are illustrated in FIG. 2 (a) and (b) in order to simplify explanation.

In FIG. 2(a), the portable telephone 10 is comprised with a wireless section 11, an external communication section 12, a storage section 13, a display section 14, an operation section 15, a sound input/output section 16, a vibrator 17 and a control section 18. The wireless section 11 connects to the network 30, such as a portable telephone communication network, Internet, etc., which has a wireless communication function connectable to a predetermined access point, etc. in accordance with standard practice of a communication function connectable to a portable telephone communication network or a wireless LAN (Local Area Network).

The external communication section 12 is composed of a means to actualize at least one or more short distance communications, such as BAN (Body Area Network; human body communication network), NFC (Near Field Communication), Bluetooth (registered trademark), etc. The external communication section 12 transmits and receives information by communicating with other portable telephones which are residing in a predetermined distance range and devices having an identical communication function. Particularly in this embodiment, when an automatic translation service is employed and provided by the translation server 40, the external communication section 12 establishes communication with an other party's portable telephone, and exchanges each other's language used and contact information (for example, telephone number) between the other party's portable telephone.

The storage section 13 stores various parameters, etc. which are required for a program, operation, etc. executed by the control section 18 described later. Also, the storage section 13 stores temporary data when the control section 18 executes a program, and data for various application programs , various parameters, contents, etc. required for execution of an application. Particularly in this embodiment, the storage section 13 stores language information which represents the language used by the user of the portable telephone 10 and contact information, such as telephone number, etc. (Hereafter referred to as language/telephone number). A user registers the language/ telephone number in advance. Also, the storage section 13 may be configured with a ROM (Read-Only Memory) and a RAM (Random Access Memory), and may be a rewritable nonvolatile memory, such as a flash memory, etc. , respectively.

The display section 14 is composed of a liquid crystal display, organic EL (Electro Luminescence) indicators, etc., and displays specific functions, an icon assigned to an application, etc. , the operation screen of an application, etc. The operation section 15 is composed of hardware switches, such as a power supply switch, a volume switch, etc.

The control section 18 controls operation of each section by executing a program stored in the storage section 13 mentioned above. Particularly in this embodiment, prior to interactive operation using an automatic translation service which the translation server 40 provides and is conducted between other portable terminals, etc., the control section 18 establishes communication with other parties portable telephones (information terminals other than a portable telephone are also acceptable) by the external communication section 12 and controls to exchange each other's language/telephone number between terminals.

Additionally, when the language used in the other party's portable telephone is different, the control section 18 automatically connects to the translation server 40 by the wireless section 11 without requiring a user operation, communicates the language/telephone number of the portable telephone 10 and the other party's language/telephone number (origination side), and commences interactive operation with the other party's portable telephone by the automatic translation service provided by the translation server 40.

Further, while the other party's portable telephone is within a predetermined distance, the control section 18 maintains the connection to the translation server 40 by the wireless section 11 and continues interactive operation by the automatic translation service. After a conversation is concluded or the other party' s portable terminal is separated by more than a predetermine distance, the connection to the translation server 40 by the wireless section 11 is automatically disconnected, and the interactive operation by the automatic translation service is terminated.

In FIG. 2 (b), the translation server 40 is comprised with a communication section 41, a storage section 42, a display section 43, an operation section 44, a translation section 45 and a control section 46. The communication section 41 has a communication function connectable to a portable telephone communication network and connects to the network 30, such as a portable telephone communication network, Internet, etc. The storage section 42 stores various parameters, etc. which are required for a program, operation, etc. executed by the control section 46 described later. Also, the storage section 42 stores temporary data when the control section 46 executes a program, and data for various application programs, various parameters, contents, etc. required for execution of an application. Particularly in this embodiment, the storage section 42 stores the program for a translation application, various parameters required for execution of the translation application, dictionaries of various languages used for translation, etc. The display section 43 is composed of a liquid crystal display, organic EL indicators, etc., and displays a variety of information. The operation section 44 is composed of a pointing device, such as a keyboard, mouse, etc.

The translation section 45 translates the portable telephones 10-1 and 10-2 voice data, text, etc. into the language of the other party under the control of the control section 46. The control section 46 controls operation of each section by executing a program stored in the storage section 42 mentioned above. Particularly in this embodiment, after connection by the portable telephones 10-1 and 10-2, the control section 46 actualizes a conversation by translating between the portable telephones with the translation section 45, based on each other's communicated language/telephone number.

In detail, the control section 46 translates voice data, text, etc. of the portable telephones 10-1 and 10-2 into the language of the other party by the translation section 45, and transmits a translation result to the predetermined portable telephone 10-1 and 10-2 based on their telephone number. For example, the translation section 45 translates the language (Japanese) which the user of the portable telephone 10-1 employs into the language (English) which the user the portable telephone 10-2 employs and provides the translation to the portable telephone 10-2. Conversely, the translation section 45 translates the language (English) which the user of the portable telephone 10-2 employs into the language (Japanese) which the user of the portable telephone 10-1 employs and provides the translation to the portable telephone 10-1. Accordingly, a conversation assisted by a smooth translation is achieved similar to a normal conversation.

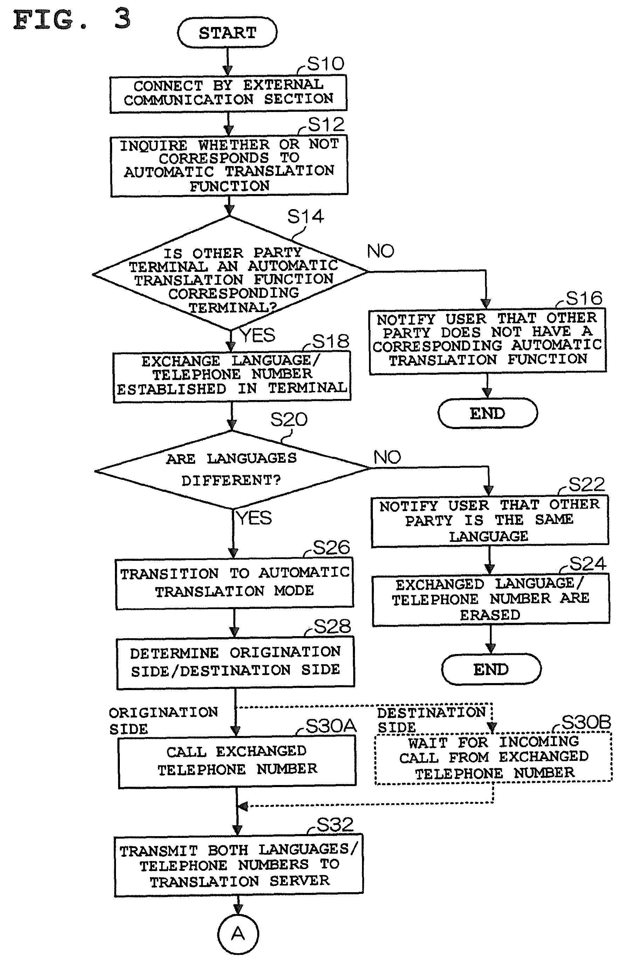

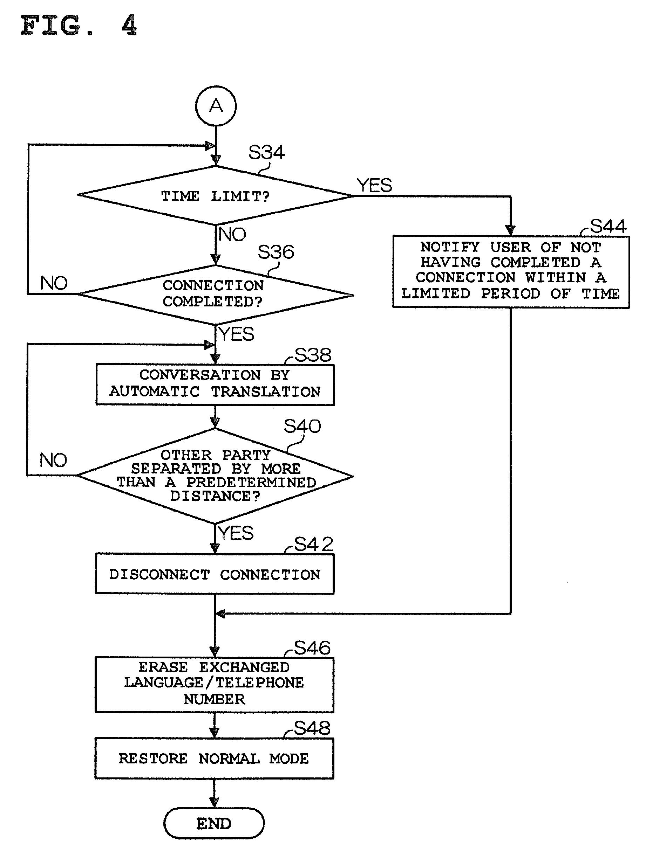

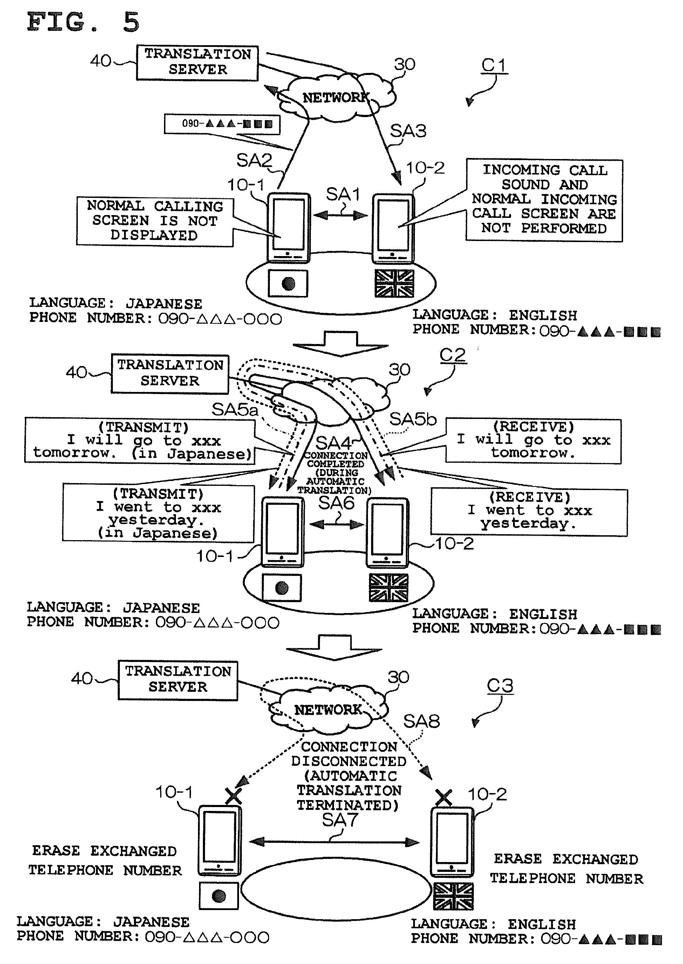

Hereinafter, operation of the above-described embodiment will be explained. FIG. 3 and FIG. 4 are flowcharts for explaining operation of the portable telephones 10-1 and 10-2 according to this embodiment. Also, FIG. 5 is a conceptual diagram for explaining operation of the translation system 100 according to this embodiment.

In the portable telephones 10-1 and 10-2, the control section 18 periodically checks whether or not an other portable telephone has come within communication range of the external communication section 12. When an other portable telephone has come within communication range, the control section 18 connects to (the external communication section of) the other portable telephone (external communication section 12) (Step S10). In detail, when the user of the portable telephone 10-1 and the user of the portable telephone 10-2 are nearby and both parties have entered within communication range of NFC, Bluetooth (registered trademark) or when both users are nearby, handshake, etc. and become a communicable state by BAN, both of the portable telephones 10-1 and 10-2 are connected by short distance wireless communication by the external communication section 12. In the following description, although the portable telephone 10-1 is perceived as an entity and the portable telephone 10-2 is explained as the other party's portable telephone, a similar operation as the portable telephone 10-1 can also be executed with the portable telephone 10-2.

Subsequently, the control section 18 in the portable telephone 10-1 inquires as to whether or not the other party's portable telephone 10-2 corresponds to an automatic translation function by short distance wireless communication by the external communication section 12 (Step S12). In detail, the control section 18 inquires whether the hardware for receiving automatic translation service via the translation server 40, the version of OS (operating system) or the application software, etc. correspond with one another. Then, the control section 18 judges whether or not the other party' s portable telephone 10-2 is an automatic translation functional corresponding terminal (Step S14).

Afterward, in cases where the control section 18 does not receive a reply or when an error is returned for the above-mentioned inquiry, the other party's portable terminal 10-2 is regarded as not corresponding to an automatic translation function (NO at Step S14), and the user is notified that the other party's portable telephone 10-2 does not have a corresponding automatic translation function (Step S16). As a notification method, for example, after the portable telephone 10-1 is vibrated by the vibrator 17, the user is notified that the other party does not have an automatic translation function with a vocal sound by the sound input/output section 16. Then, processing ends without shifting to automatic translation mode.

Conversely, in cases where there is a reply for the above-mentioned inquiry and since the other party's portable telephone 10-2 does correspond to an automatic translation function (YES at Step S14), the control section 18 exchanges the language/telephone number stored by the storage section 13 with the other party's portable telephone 10-2 using communication by the external communication section 12 (Step S18). The exchanged other party's language/telephone number are stored by the storage section 13.

Then, the control section 18 compares the other party's language stored in the storage section 13 with its own language stored in the storage section 13 and discriminates whether or both languages are different (Step S20). Then, in cases where both languages are the same (NO at Step S20) and since there is no need to employ an automatic translation function, the user is notified that the other party is using the same language (Step S22). For example, after the portable telephone 10-1 is vibrated by the vibrator 17, the user is notified that the other party is using the same language with a vocal sound by the sound input/output section 16. Subsequently, the control section 18 erases the exchanged other party's language/telephone number stored in the storage section 13 (Step S24). The other party's language/telephone number are erased because there is a high possibility that the other party' s conversation is likely to be a transitory person, such as an unspecified other party traveling to an overseas destination, a foreigner who is visiting Japan, etc. Also, in this embodiment, in cases where associated portable telephones are in the vicinity and a conversation is performed by automatic translation, since the other party's language/telephone number are automatically acquirable on a case-by-case basis, this information does not need to be saved. Then, processing ends without shifting to automatic translation mode.

Conversely, when both languages are different (YES at Step 20), the control section 18 transitions the operation mode from a normal mode to an automatic translation mode (Step S26). Here, in cases when a normal incoming call is received during the automatic translation mode, an incoming call is rejected. The reason is that if an incoming call is received during a telephone conversation, the conversation will be interrupted regardless of the intention of the other party during a telephone conversation. However, because there may also be an important telephone call in an extreme emergency, incoming call availability in the automatic translation mode is settable by the user. Subsequently, the control section 18 determines between terminals which one will serve as the origination side which calls using communication by the external communications section 12 or serve as the destination side which waits for an incoming call (Step S28). As a determining method, for example, a method which determines randomly, etc. is sufficient. Here, the portable telephone 10-1 serving as the origination side and the portable telephone 10-2 serving as the destination side will be explained.

Then, in the portable telephone 10-1 which serves as the origination side, the control section 18 performs a call to the telephone number of the other party stored in the storage section 12 by using the wireless section 11 (Step S30A). Calling is automatically executed by the control section 18 without the user having to perform a keyboard input using the operation section 15 as a trigger. Also, when calling, a screen executed at the time of a normal call is not displayed on the display section 14. However, a screen, etc. notification, for example, in automatic translation mode, can be displayed on the display section 14.

Conversely, in the portable telephone 10-2 which serves as the destination side, the control section 18 waits for an incoming call from the other party's telephone number stored in the storage section 13 (Step S30B). When an incoming call is received, the control section 18 automatically executes connection processing without a user's incoming call response operation. Also, an incoming call sound and an indication of a normal incoming call screen are not performed to the display section 14. However, a screen, etc. notification, for example, in automatic translation mode, can be displayed on the display section 14.

Here, the portable telephone 10-1 of the origination side calls to the other party's portable telephone 10-2 via the translation server 40. At this time, the portable telephone 10-1 transmits its own language/telephone number and exchanges the other party's language/telephone number via the translation server 40 (Step S32). Based on the received other party's telephone number, the translation server 40 sends to the portable telephone 10-2 and connects the portable telephone 10-1 of the original side and the portable telephone 10-2 which serves as the destination side.

Subsequently, the control section 18 discriminates whether or not the elapsed time from after the sending-and-receiving operation has reached a predetermined time or time up (Step S34). In a cases when not time up (NO at Step S34), the control section 18 discriminates whether or not a connection has been completed (Step S36). Then, when a connection has not been completed (NO at Step S36), processing reverts to Step S34 and monitors whether or not a connection is completed within a limited period of time. Then, in cases when a connection has not been completed within a limited period of time (YES at Step S34), the control section 18 notifies a user of not having completed a connection within a limited period of time with a sound by the sound input/output section 16, after vibrating the portable telephone 10 with the vibrator 17 (Step S44). Subsequently, the control section 18 erases the exchanged other party' s language/telephone number from the storage section 13 (Step S46), and restores the operation mode to normal mode (Step S48). The reason for erasing the other party's language/ telephone number is as described above. Subsequently, processing ends.

In a state C1 (top row) as illustrated in FIG. 5, the language used in the portable telephone 10-1 is Japanese and the language used in the portable telephone 10-2 is English, whereby the language/telephone number are exchanged using communication by the external communication section 12 (SA1). Subsequently, a situation is illustrated where the portable telephone 10-1 serving as the origination side calls to the exchanged telephone number address via the translation server 40 (SA2), and the portable telephone 10-2 serving as the destination side responds to an incoming call (SA3). On the screen of the portable telephone 10-1, a normal calling screen is not displayed. Similarly, in the portable telephone 10-2 an incoming call sound is not audibly sent and a normal incoming call screen is not displayed.

Conversely, when a connection is completed within a limited period of time (YES at Step S36), the control section 18 transitions to automatic translation mode and executes a conversation by automatic translation between the other party's portable telephone 10-2 (Step S38). In detail, after converting the vocal sound inputted by a user from the sound input/output section 16 into voice data, it is transmitted to the translation server 40 via the network 30 as voice data from the wireless section 11. Then, after being received and decoded by the wireless section 11, the completed translation of the voice data is transmitted from the translation server 40 and outputted as vocal sound from the sound input/output section 16.

In a state C2 (middle row) as illustrated in FIG. 5, a situation is shown during automatic translation where the portable telephones 10-1 and 10-2 are connected in wireless communication by the wireless section 11 via the translation server 40 on above network 30 (SA4). When the portable telephone 10-1 transmits voice data (Japanese) to the translation server 40, the translation server 40 performs language translation (Japanese→English) of the voice data from the portable telephone 10-1 and transmits to the other party's portable telephone 10-2 via the network 30 (SA5a). Conversely, when the portable telephone 10-2 transmits voice data (English) to the translation server 40, the translation server 40 performs language translation (English → Japanese) of the voice data from the portable telephone 10-2 and transmits to the portable telephone 10-1 via the network 30 (SA5b).

As shown in FIG. 5, for example, when the user of the portable telephone 10-1 performs a voice input of "I will go to xxx tomorrow" (in Japanese), this will be translated into "I will go to xxx tomorrow" and transmitted to the portable telephone 10-2. On the other hand, when the user of the portable telephone 10-2 performs a voice input of "I went to xxx yesterday", this will be translated into "I went to xxx yesterday" (in Japanese) and transmitted to the portable telephone 10-1. Also, the portable telephones 10-1 and 10-2 monitor each other's distance during automatic translation using communication by the external communication section (SA6).

During a conversation by automatic translation, the control section 18 discriminates whether or not the other party's portable telephone 10-2 is separated by more than a predetermined distance and, in other words, within a predetermined distance to each other using communication by the external communication section 12 (Step S40). For example, the control section 18 monitors the field strength of electromagnetic waves which the other party's portable telephone 10-2 sends by the external communication section 12. In cases where the field strength becomes less than a predetermined threshold, the control section 18 judges that the other party's portable telephone 10-2 is separated by more than a predetermined distance.

Then, in cases where the other party's portable telephone 10-2 is not separated by more than a predetermined distance (NO at Step 40), processing reverts to Step S38 and the control section 18 continues a conversation in automatic translation. On the other hand, in cases where the other party's portable telephone 10-2 is separated by more than a predetermined distance (YES at Step 40), the control section 18 disconnects the communication connection by the wireless section 11 (Step S42). As the control section 18 executes automatically, a user does not have to perform a keyboard input using the operation section 15 as a trigger. Also, the control section 18 does not display a connection disconnected screen on the display section 14. Next, the control section 18 erases the exchanged other party's language/telephone number from the storage section 13 (Step S46), and restores the operation mode to normal mode (Step S48). Subsequently, processing ends.

In a state C3 (bottom row) as illustrated in FIG. 5, a situation is shown where the portable telephone 10-1 and the portable telephone 10-2 are separated by more than a predetermined distance (SA7), communication is disconnected by the wireless section 11 (SA8), and automatic translation is terminated. After communication is disconnected, the exchanged other party's telephone number is erased in the portable telephone 10-1 and the portable telephone 10-2, respectively.

According to the above-described embodiment, the language used/contact information is exchanged between portable telephones using any short distance communication, such as BAN, NFC, Bluetooth (registered trademark), etc. In cases where the language used is different, a connection between portable telephones is automatic without performing calling/incoming call response notification by user operation. Since automatic translation is commenced by the translation server 40, there is no requirement for a user' s calling/incoming call response operation, language setting operation, etc. and automatic translation can be commenced. As a result, while being able to mitigate the complexity of user operation, useless connections to a communication line network can be reduced.

Also, according to the above-described embodiment, when the other party' s portable telephone is separated by more than a predetermined distance, a connection between portable telephones is automatically disconnected without the user having to perform a disconnect operation. Since automatic translation was terminated, automatic translation can be terminated without requiring a user's disconnect operation.

Further, according to the above-described embodiment, when the other party's portable telephone does not correspond to an automatic translation function, or when the other party is the same language, or when a connection is not completed within a limited period time and automatic translation is not completed, the vibrator 17 vibrates and the user is notified with a vocal sound. Consequently, the user is not kept idly waiting.

Here, the above-described embodiment illustrated a procedure in portable telephones which make telephone calls by a switched line method. However, portable telephones which make telephone calls by a packet method are also acceptable.

Also, in the above-described embodiment, when shifting to the automatic translation mode at Step S40, normal incoming calls are rejected during automatic translation mode. However, instead of rejecting incoming calls, the terminal device may be set to perform incoming call processing.

Also, in the above-described embodiment, although voice data is translated in the translator server 40 and provided to the portable telephones 10-1 and 10-2 as voice data, a user may also transmit to a network as text data rather than voice data. In that case, text is read out on the portable telephone side or the network side which performs data reception and converts into voice data.

Also, in the above-described embodiment, although the distance of the other party' s portable telephone is judged by the electromagnetic wave strength of communication by the external communication section 12; however, the present invention is not limited thereto. Position information on the portable telephones 10-1 and 10-2 may be acquired with GPS (Global Positioning System), etc., and the respective distances of the portable telephones 10-1 and 10-2 may be judged by exchanging position information.

Also, in the above-described embodiment, although the other party's portable telephone is disconnected the moment separated by more than a predetermined distance, the disconnection trigger of a connection is not limited to distance with the other party's portable telephone. Communication can be disconnected the moment of detecting a specific keyword within a conversation, such as "bye bye", or generating communication by BAN shaking hands again, etc., are also acceptable.

Also, in the above-described embodiment, when the other party' s portable telephone does not correspond to an automatic translation function, or when the other party is the same language and automatic translation is unnecessary, or when a connection is not completed within a limited period of time and startup of automatic translation failed, after vibrating the portable telephone with the vibrator 17, although the user is notified of the reason for terminating automatic translation with a vocal sound, a user can be notified of the reason for terminating automatic translation with a screen display rather than a vocal sound.

Also, in the above-described embodiment, although the language/telephone number of the other party's portable telephone are exchanged, the contact information can be a temporary ID rather than a telephone number. In that case, a temporary ID determined by either one of the portable telephones is communicated to the other portable telephone, and a connection is requested (calling both portable telephones) addressed to the same temporary IDs from the translation server 40 on the network 30. A connection between both portable telephones is completed by connecting a vocal sound path between portable telephones whose temporary IDs correspond with the translation server 40.

Also, in the above-described embodiment, the present invention can be made to automatically perform other operations necessary for translation of a telephone call. For example, at the time of shifting to automatic translation mode, a noise cancellation function can be automatically turned ON so that the actual voice spoken by an other person(s) in the vicinity cannot be heard. Then, after restoring the normal mode, the noise cancellation function can be automatically turned OFF.

Further, although the above-described embodiment is an example which is applied to a portable telephone as the terminal device, the present invention is not limited to this type of terminal device alone. The present invention is also applicable, for example, to a smartphone or other devices (such as, a game machine, a tablet PC (Personal Computer), a notebook PC, or a PDA (Personal Data Assistant: portable information terminal).

This application is based upon and claims the benefit of priority from the prior Japanese Patent Application No. 2013-049980 filed March 13, 2013, the entire contents of which are incorporated herein by reference.

Hereinafter, Supplementary Notes describe the characteristics of the present invention.

The above-described embodiments can be partially or entirely described as in the following Supplementary Notes; however, the embodiment is not limited to these Supplementary Notes.

### (Supplementary Note 1)

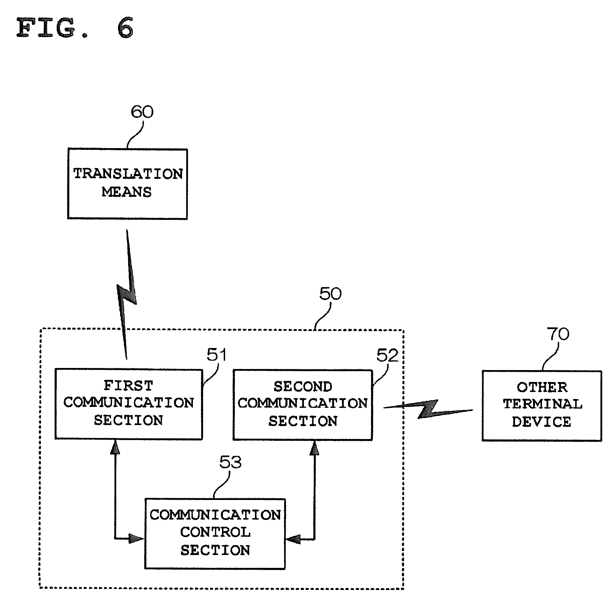

FIG. 6 is a block diagram illustrating the structure of Supplementary note 1. Here, the correspondence relation of FIG. 6 and FIG. 2 will be explained. The first communication section 51 of FIG. 6 is equivalent to the wireless section 11 of FIG. 2(a). The second communication section 52 of FIG. 6 is equivalent to the external communication section 12 of FIG. 2(a). Also, the communication control section 53 of FIG. 6 is equivalent to the control section 18 of FIG. 2(a) . Further, the translation means 60 of FIG. 6 is equivalent to the translation server 40 illustrated in FIG. 2(b).

As illustrated in this drawing, Supplementary Note 1 describes the present invention of a terminal device 50 characterized by comprising: a first communication section 51 which connects to a translation means 60; a second communication section 52 which has a shorter communicable distance in comparison with the first communication section 51; and a communication control section 53 which, after information of an other terminal device is received by the second communication section 52, controls to commence communication with the translation means 60 by the first communication section 51 based on the information of the other terminal device.

### (Supplementary Note 2)

The terminal device according to Supplementary Note 1, characterized in that the communication control section receives at least language used information as information of the other terminal device, and controls to commence communication with the translation means by the first communication section based on the language used information.

### (Supplementary Note 3)

The terminal device according to Supplementary Note 2, characterized in that the communication control section commences communication with the translation means by the first communication section when both languages used are different, based on the language used information of a portable terminal and the language used information of the other terminal device.

### (Supplementary Note 4)

The terminal device according to any one of Supplementary Notes 1 to 3, characterized in that the communication control section disconnects communication with the translation means by the first communication section, when the other terminal device is separated by more than a predetermined distance.

### (Supplementary Note 5)

The terminal device according to any one of Supplementary Notes 1 to 4, characterized in that the communication control section judges whether or not communication is necessary based on the information, and when judged communication is necessary commences communication with the translation means by the first communication section.

### (Supplementary Note 6)

A translation system including a translation server and a plurality of terminal devices, the translation system characterized by the translation server comprising: a translation section which translates information inputted from the plurality of terminal devices into information of an other language; the plurality of terminal devices comprising: a first communication section which is connected to the translation server; a second communication section which has a shorter communicable distance in comparison with the first communication section; a communication control section which, after information of an other terminal device is received by the second communication section, controls to commence communication with the translation server by the first communication section based on the information; and a presentation section which presents the information from the other terminal device which has been acquired from the translation server through communication by the first communication section and translated into the other language by the translation section.

### (Supplementary Note 7)

The translation system according to Supplementary Note 6, characterized in that the translation section establishes a translation language between the plurality of terminal devices based on respective information of the plurality of terminal devices.

### (Supplementary Note 8)

The translation system according to Supplementary Notes 6 or 7, characterized in that the communication control section disconnects communication with the translation server by the first communication section, when the other terminal device is separated by more than a predetermined distance.

### (Supplementary Note 9)

A communication control method characterized by including: a first communication step of connecting with a translation means by a first communication section; a reception step of receiving information of an other terminal device by a second communication section which has a shorter communicable distance in comparison with the first communication section; and a communication control step of controlling to commence communication with the translation means by the first communication section based on the information of the other terminal device.

### (Supplementary Note 10)

A program characterized by causing a computer of a terminal device to execute: a first communication function of connecting with a translation means by a first communication section;a reception function of receiving information of an other terminal device by a second communication section which has a shorter communicable distance in comparison with the first communication section; and a communication control function of controlling to commence communication with the translation means by the first communication section based on the information of the other terminal device.

### DESCRIPTION OF REFERENCE NUMERALS

- 10, 10-1, 10-2: Portable telephone
- 11: Wireless section
- 12: External communication section
- 13: Storage section
- 14: Display section
- 15: Operation section
- 16: Sound input/output section
- 17: Vibrator
- 18: Control section
- 20: Base station
- 30: Network
- 40: Translation server
- 41: Communication section
- 42: Storage section
- 43: Display section
- 44: Operation section
- 45: Translation section
- 46: Control section

## Claims

1. A terminal device **characterized by** comprising:
a first communication section which connects to a translation means;
a second communication section which has a shorter communicable distance in comparison with the first communication section; and
a communication control section which, after information of an other terminal device is received by the second communication section, controls to commence communication with the translation means by the first communication section based on the information of the other terminal device.

2. The terminal device according to claim 1, **characterized in that** the communication control section receives at least language used information as information of the other terminal device, and controls to commence communication with the translation means by the first communication section based on the language used information.

3. The terminal device according to claim 2, **characterized in that** the communication control section commences communication with the translation means by the first communication section when both languages being used are different, based on the language used information of a portable terminal and the language used information of the other terminal device.

4. The terminal device according to any one of claims 1 to 3, **characterized in that** the communication control section disconnects communication with the translation means by the first communication section, when the other terminal device is separated by more than a predetermined distance.

5. The terminal device according to any one of claims 1 to 4, **characterized by** the communication control section judges whether or not communication is necessary based on the information, and when judged communication is necessary commences communication with the translation means by the first communication section.

6. A translation system including a translation server and a plurality of terminal devices, the translation system **characterized by**
the translation server comprising:
a translation section which translates information inputted from the plurality of terminal devices into information of other languages; and
the plurality of terminal devices comprising:
a first communication section which is connected to the translation server;
a second communication section which has a shorter communicable distance in comparison with the first communication section;
a communication control section which, after information of an other terminal device is received by the second communication section, controls to commence communication with the translation server by the first communication section based on the information; and
a presentation section which presents the information from the other terminal device which has been acquired from the translation server through communication by the first communication section and translated into the other language by the translation section.

7. The translation system according to claim 6, **characterized in that** the translation section establishes a translation language between the plurality of terminal devices based on respective information of the plurality of terminal devices.

8. The translation system according to claim 6 or 7, **characterized in that** the communication control section disconnects communication with the translation server by the first communication section, when the other terminal device is separated by more than a predetermined distance.

9. A communication control method **characterized by** including:
a first communication step of connecting with a translation means by a first communication section;
a reception step of receiving information of an other terminal device by a second communication section which has a shorter communicable distance in comparison with the first communication section; and
a communication control step of controlling to commence communication with the translation means by the first communication section based on the information of the other terminal device.

10. A program **characterized by** causing a computer of a terminal device to execute:
a first communication function of connecting with a translation means by a first communication section;
a reception function of receiving information of an other terminal device by a second communication section which has a shorter communicable distance in comparison with the first communication section; and
a communication control function of controlling to commence communication with the translation means by the first communication section based on the information of the other terminal device.
